# FASCICULE DE BREVET EUROPEEN

(11) **EP 4 288 646 B1**
(45) Date de publication et mention de la délivrance du brevet: **26.02.2025**
(21) Numéro de dépôt: 22706339.3
(22) Date de dépôt: 05.01.2022
(51) Int. Cl.: F01N 3/10, F01N 9/00, F01N 11/00

(54) **PROCÉDÉ DE RÉGULATION DU FONCTIONNEMENT D'UN CATALYSEUR DE GAZ D'ÉCHAPPEMENT PRODUITS PAR LE MOTEUR THERMIQUE D'UN VÉHICULE AUTOMOBILE**
VERFAHREN ZUR STEUERUNG DES BETRIEBS EINES KATALYSATORS FÜR ABGASE AUS EINEM KRAFTFAHRZEUGVERBRENNUNGSMOTOR
METHOD FOR CONTROLLING THE OPERATION OF A CATALYTIC CONVERTER FOR EXHAUST GASES PRODUCED BY A MOTOR VEHICLE COMBUSTION ENGINE

(30) Priorité: 08.02.2021 FR 2101176
(43) Date de publication de la demande: 13.12.2023
(73) Titulaire: Stellantis Auto SAS, 78300 Poissy (FR)
(72) Inventeur: TRAVAILLARD, Cyril, 78920 Ecquevilly (FR); DAMBRICOURT, Frederic, 78600 Maisons Laffitte (FR); BOLZER, Mathieu, 77176 Savigny Le Temple (FR)
(74) Mandataire: PSIP
(86) Numéro de dépôt international: PCT/FR2022/050020
(87) Numéro de publication internationale: WO 2022/167736

(56) Documents cités:
- EP-A1- 2 899 388
- EP-A1- 3 438 432
- US-A1- 2003 024 514
- US-A1- 2020 332 731

## Description

### Domaine technique de l'invention

L'invention relève du domaine des appareils de traitement des gaz d'échappement produits par un moteur thermique équipant un véhicule automobile. L'invention concerne plus spécifiquement les procédés de régulation du fonctionnement en temps réel d'un catalyseur placé sur une ligne d'échappement des gaz à traiter, permettant d'améliorer les performances du catalyseur à traiter les gaz d'échappement préalablement à leur rejet dans l'atmosphère.

### Art antérieur

Les véhicules automobiles sont couramment équipés d'un groupe motopropulseur au moins comprenant un moteur à combustion interne - dit aussi moteur thermique - voire aussi comprenant une motorisation électrique dans le cas d'un véhicule à motorisation propulsive hybride. De tels moteurs thermiques sont alimentés en combustible et en comburant dont les quantités respectives sont régulées. Communément, le combustible est à base d'hydrocarbures et le comburant est l'air. Par suite de la combustion des hydrocarbures, le moteur thermique produit des gaz d'échappement qui sont acheminés en sortie du moteur thermique vers l'extérieur du véhicule, via une ligne d'échappement.

Cependant, la combustion complète du combustible est délicate à obtenir. Il en résulte que les gaz d'échappement émis par le moteur thermique sont souvent chargés de divers composants chimiques. A titre indicatif, de tels composants chimiques comprennent notamment du monoxyde de carbone (CO), de l'oxyde d'azote (NOx) et des imbrûlés d'hydrocarbures (HC). De tels composants chimiques sont toxiques et en conséquence doivent réglementairement être réduits préalablement au rejet des gaz d'échappement dans l'atmosphère.

A cet effet, la ligne d'échappement intègre au moins un catalyseur de traitement des gaz d'échappement par oxydation, en exploitant l'oxygène présent dans les gaz d'échappement. Cependant, l'efficacité du catalyseur à traiter les gaz d'échappement dépend de plusieurs facteurs lors de sa mise en fonctionnement, tels que notamment sa température qui doit être suffisamment élevée à un seuil de température prédéfini, la teneur dans les gaz d'échappement des agents chimiques à traiter, et/ou la capacité de stockage du catalyseur en oxygène.

C'est pourquoi il est opportun de contrôler en temps réel la capacité du catalyseur à traiter efficacement les gaz d'échappement et - en cas de défaillance - d'intervenir pour optimiser ses performances. Il est connu à cet effet d'embarquer à bord du véhicule un dispositif de contrôle-commande comprenant un système d'analyse en temps réel du fonctionnement du catalyseur et un régulateur de son fonctionnement. Dans le cas où le système d'analyse identifie une défaillance du catalyseur à traiter efficacement les gaz d'échappement, le régulateur est activé pour améliorer ses performances.

Pour ce faire, il est courant d'utiliser des sondes à oxygène placées sur la ligne d'échappement en amont et en aval du catalyseur. De telles sondes à oxygène sont notamment des sondes voltaïques, c'est-à-dire mesurant un potentiel électrique. Il est notamment connu d'utiliser une sonde amont fournissant des mesures proportionnelles, et une sonde aval fournissant des mesures binaires. Pour précision, les notions amont et aval utilisées ici et par la suite sont des notions relatives considérées suivant le sens de circulation des gaz d'échappement à travers le catalyseur.

L'analyse du fonctionnement du catalyseur est notamment réalisée en continu - ou autrement dit en temps réel - à différents points de fonctionnement du moteur thermique. Une telle analyse est réalisée par comparaison entre la réponse du catalyseur à une sollicitation d'épuration des gaz d'échappement par rapport à une réponse nominale de référence. Selon la différence obtenue entre lesdites réponses, il est déduit si le catalyseur fonctionne correctement par comparaison de la différence obtenue entre les réponses avec un seuil de référence.

A partir des mesures fournies par les sondes à oxygène, le système d'analyse identifie une différence de richesse en oxygène présent dans les gaz d'échappement respectivement en amont et en aval du catalyseur. Dans le cas où il ressort d'une telle analyse une capacité insuffisante du catalyseur à traiter efficacement les gaz d'échappement, le régulateur est alors activé.

On pourra par exemple se reporter à ce propos au document FR3058183-B1 (PEUGEOT CITROEN AUTOMOBILES SA). Selon ce document, il est proposé d'estimer la température du catalyseur et sa capacité de stockage en oxygène, à partir de mesures effectuées par des sondes à oxygène installées sur la ligne d'échappement respectivement en amont et en aval du catalyseur. Si la température estimée du catalyseur est inférieure à une température seuil prédéfinie, le catalyseur et/ou les gaz d'échappement à traiter sont chauffés jusqu'à parvenir à un échauffement du catalyseur à ladite température seuil. Cependant la fiabilité de l'analyse du fonctionnement du catalyseur peut être délicate à obtenir, notamment au cours des phases transitoires du fonctionnement du moteur thermique. Dans de tels cas, les analyses effectuées alors que le fonctionnement du moteur thermique est instable peuvent être erronées. Le résultat de l'analyse n'est alors pas significativement révélateur de la capacité réelle du catalyseur à traiter les gaz d'échappement.

Il en découle alors un apprentissage erroné par le dispositif de contrôle-commande d'une défaillance potentiellement inexistante du fonctionnement du catalyseur, qui peut être irréversible. Ceci a finalement pour conséquence de provoquer une régulation inadaptée du fonctionnement du catalyseur. Le document US2003024514A1 concerne un appareil de commande du rapport air-carburant qui est capable d'évaluer un état détérioré d'un convertisseur catalytique pour purifier un gaz d'échappement.

### Présentation de l'invention

Sur la base du constat qui vient d'être fait, l'invention vise à pallier les insuffisances de l'état de la technique concernant l'obtention d'une régulation pertinente en temps réel des performances d'un catalyseur à traiter les gaz d'échappement produits par le moteur thermique d'un véhicule automobile.

L'invention vise plus spécifiquement à apporter une solution pour fiabiliser l'analyse du fonctionnement du catalyseur et par suite pour obtenir une régulation pertinente de son fonctionnement afin d'en améliorer ses performances. Une telle analyse fiable est notamment recherchée en évitant que des phases transitoires de fonctionnement du moteur thermique ne perturbent une analyse correcte du fonctionnement du catalyseur.

Pour ce faire la démarche de l'invention relevant au moins en partie du constat préalablement mentionné, est fondée sur le fait qu'une correction proportionnelle intégrale des mesures fournies par la sonde amont permet de dynamiser la correction effectuée, notamment dans le cas d'une erreur importante détectée lors de l'analyse du fonctionnement du catalyseur. Une telle correction est réalisée par un intégrateur que comprend le système d'analyse. Pour préciser, l'intégrateur est un circuit logique délivrant un signal de sortie proportionnel à l'intégrale temporelle d'un signal d'entrée.

L'intégrateur réalise une correction proportionnelle intégrale des mesures fournies par la sonde aval, ce qui permet d'éliminer une erreur statique détectée lors de l'analyse du fonctionnement du catalyseur, notamment en cas d'une dispersion de la fiabilité des mesures fournies par la sonde amont. Les facteurs dynamiques d'analyse du fonctionnement du catalyseur par l'intégrateur peuvent être définis par des modèles analytiques selon divers paramètres, comme par exemple une erreur de tension de la sonde aval, le débit massique des gaz d'échappement, un facteur de vieillissement du catalyseur et/ou une consigne de tension aval.

Idéalement sur un système nominal lorsque l'intégrateur est activé, une erreur de voltage détectée par la sonde amont devrait être proche de 0 (zéro). Cependant, une activation de l'intégrateur alors que la régulation amont n'est pas maîtrisée - ou autrement dit est instable tel que notamment en phase transitoire de fonctionnement du moteur thermique - peut provoquer une dérive du résultat fourni par l'intégrateur au régulateur du fonctionnement du catalyseur. Le régulateur est notamment - sans être exclusif - au moins un régulateur du dosage en comburant et combustible admis dans le moteur thermique.

Une instabilité des mesures fournies par la sonde aval provoque alors des divergences entre des erreurs détectées et des erreurs effectives - ou autrement dit réelles - identifiant une défaillance du catalyseur à traiter les gaz d'échappement. Les erreurs détectées sont dans ce cas des erreurs erronées et provoquent une régulation inappropriée de la richesse en oxygène des gaz d'échappement traversant le catalyseur.

Il est dès lors proposé par l'invention de tendre vers une convergence de la richesse en oxygène déduite par l'intégrateur respectivement en amont et en aval du catalyseur, en identifiant en temps réel les mesures fournies par la sonde aval sur la base d'un référentiel commun - ou autrement dit identique - avec des mesures stables fournies par la sonde amont. La stabilité de telles mesures sur une durée prédéfinie est révélatrice d'un état stable de fonctionnement du catalyseur favorable à une analyse pertinente en temps réel de son fonctionnement et par suite favorable à une régulation adaptée du fonctionnement du catalyseur.

L'activation de l'intégrateur est alors conditionnée au moins à une stabilisation des données fournies par la sonde amont. Ceci permet d'exclure l'acquisition par le dispositif de contrôle-commande de données erronées relatives à des erreurs inexistantes de richesse en oxygène en amont et en aval du catalyseur. Dès lors que des erreurs détectées à partir des mesures effectuées par la sonde amont convergent vers un seuil d'erreur admissible qui est prédéfini par calibrage - dans une plage d'erreurs proches de 0 (zéro) - seulement les mesures binaires fournies par la sonde aval peuvent être prises efficacement en compte - sur la base dudit seuil d'erreur - pour identifier une erreur effective nécessitant une régulation du fonctionnement du catalyseur.

L'analyse du fonctionnement du catalyseur étant fiabilisée, une régulation pertinente de son fonctionnement est obtenue. Ainsi, la performance du catalyseur à traiter les gaz d'échappement préalablement à leur rejet à l'atmosphère est optimisée, nonobstant les phases transitoires du fonctionnement du moteur thermique au cours desquelles l'intégrateur est désactivé.

L'activation de l'intégrateur est conditionnée d'une part à un premier paramètre relatif à une stabilisation de l'état de fonctionnement du catalyseur sur une durée significative de stabilisation, et d'autre part à un deuxième paramètre relatif à ladite convergence d'erreur de la richesse en oxygène des gaz d'échappement en amont du catalyseur par rapport audit seuil d'erreur de référence.

Il est aussi proposé d'évaluer la durée de stabilisation de l'état de fonctionnement du catalyseur selon une valeur temporelle qui est de préférence identifiée au moins par une donnée relative au débit massique des gaz d'échappement traversant le catalyseur. Il est aussi de préférence pris en compte l'état de vieillissement du catalyseur pour calibrer un seuil de masse gazeuse identifiant un état stable de fonctionnement du catalyseur.

Un tel débit massique est notamment déterminé par un compteur de masse gazeuse, dont l'activation est conditionnée à l'identification préalable de la validation des conditions relevant du premier paramètre. Autrement dit, les conditions d'activation de l'intégrateur sont appliquées en série, premièrement par validation des conditions relevant du premier paramètre et deuxièmement par activation du compteur de masse gazeuse sous dépendance de l'obtention préalable de la validation des conditions relevant du premier paramètre. L'invention permet ainsi de maîtriser la performance de l'intégrateur à fournir une analyse fiable du fonctionnement du catalyseur à au moins un régulateur de son fonctionnement, notamment un régulateur de la richesse en oxygène contenu dans les gaz d'échappement en amont du catalyseur. Une telle régulation est avantageusement effectuée au moins par contrôle du dosage en comburant et combustible admis dans le moteur thermique.

Une telle analyse fiable est obtenue au regard de la précision des résultats issus du traitement des mesures binaires fournies par la sonde aval, qui sont rectifiées par l'intégrateur dans une plage d'erreurs proche de zéro selon un référentiel conforme - ou autrement dit identique - à celui identifiant les mesures fournies par la sonde amont.

Il est à relever que l'invention est simple à mettre en oeuvre au sein d'un dispositif de contrôle-commande régulant la richesse en oxygène présent dans les gaz d'échappement en aval du catalyseur à partir d'une régulation du dosage en comburant et combustible admis dans le moteur thermique.

Au titre de l'exposé qui vient d'être fait, l'invention a pour objet un procédé de régulation en temps réel du fonctionnement d'au moins un catalyseur de gaz d'échappement produits par un moteur thermique équipant un véhicule automobile. Le procédé de l'invention met en oeuvre un dispositif de contrôle-commande comprenant un système d'analyse en temps réel du fonctionnement du catalyseur et au moins un régulateur d'une admission d'air dans les gaz d'échappement en amont du catalyseur.

La mise en oeuvre du régulateur est placée sous dépendance d'un ordre d'activation émis par le système d'analyse en cas de détection d'une erreur de richesse en oxygène dans les gaz d'échappement en amont du catalyseur. Ladite erreur en oxygène est détectée à partir d'un traitement logique par le système d'analyse de mesures respectivement fournies par des sondes à oxygène voltaïques placées sur une ligne d'échappement des gaz d'échappement. Les sondes à oxygène comprennent une sonde amont proportionnelle et une sonde aval binaire respectivement placées en amont et en aval du catalyseur.

Selon l'invention, ladite erreur de richesse en oxygène est identifiée après une correction proportionnelle intégrale des mesures fournies par la sonde aval qui est réalisée par un intégrateur que comprend le système d'analyse. L'activation de l'intégrateur est conditionnée au moins sous dépendance de la validation d'un premier paramètre et d'un deuxième paramètre.

Le premier paramètre est relatif à une convergence d'erreur de la richesse en oxygène des gaz d'échappement mesurée en amont du catalyseur par la sonde amont par rapport à un seuil d'erreur prédéfini. Le deuxième paramètre est relatif à une détection d'un état stable de fonctionnement du catalyseur sur une durée prédéfinie.

Il est compris que ledit seuil d'erreur est inscrit dans une plage de valeurs d'erreur admissibles proches d'une valeur nulle, qui est préalablement définie par calibrage de l'intégrateur. A titre indicatif non restrictif, une telle plage de valeurs d'erreur admissibles est de l'ordre comprise entre -0,15 V et + 0,15 V (V : volt).

D'autres caractéristiques préférées du procédé de l'invention sont mentionnées ci-après. La validation du deuxième paramètre est opérée sous dépendance de la validation préalable du premier paramètre.

Ledit seuil d'erreur est inscrit dans une plage de valeurs d'erreur admissibles proches d'une valeur nulle, qui est préalablement définie par calibrage de l'intégrateur.

La détection d'un état stable de fonctionnement du catalyseur sur une durée prédéfinie est identifiée à partir d'une évaluation d'une masse de gaz d'échappement traversant le catalyseur en une quantité au moins égale à un seuil de masse gazeuse prédéfini par calibrage.

Ledit seuil de masse gazeuse est prédéfini par calibrage au moins selon la vétusté du catalyseur.

Ladite évaluation d'une masse de gaz d'échappement traversant le catalyseur est fournit par un compteur de masse gazeuse.

L'activation du compteur de masse gazeuse est conditionnée à l'obtention préalable de ladite convergence d'erreur de la richesse en oxygène des gaz d'échappement en amont du catalyseur par rapport audit seuil d'erreur de référence prédéfini.

Ladite évaluation d'une masse de gaz d'échappement traversant le catalyseur peut aussi prendre en compte au moins un débit d'air et/ou de combustible admis dans le moteur thermique.

Autrement dit, ladite évaluation d'une masse de gaz d'échappement traversant le catalyseur peut prendre en compte - isolément ou en combinaison - soit seulement le débit d'air admis dans le moteur thermique, soit seulement le débit en combustible admis dans le moteur thermique. De préférence, il est pris en compte le dosage en air et en combustible admis dans le moteur thermique.

L'invention a aussi pour objet un dispositif de régulation en temps réel du fonctionnement d'au moins un catalyseur de gaz d'échappement produits par un moteur thermique équipant un véhicule automobile. Le dispositif de régulation comprend un dispositif de contrôle-commande comportant un système d'analyse en temps réel du fonctionnement du catalyseur à partir de mesures fournies par lesdites sondes à oxygène. Le dispositif de contrôle commande comporte aussi au moins un régulateur - dont un régulateur d'une admission d'air dans les gaz d'échappement en amont du catalyseur - dont la mise en oeuvre est placée sous dépendance du système d'analyse.

Selon l'invention, ledit dispositif de régulation est configuré conformément à la mise en oeuvre d'un procédé tel qu'il vient d'être décrit. Pour précision, le système d'analyse équipant le dispositif de régulation comprend dans sa généralité ledit intégrateur effectuant ladite correction proportionnelle intégrale des mesures fournies par la sonde aval préalablement à l'identification de ladite erreur de richesse en oxygène dans les gaz d'échappement en amont du catalyseur.

L'invention a aussi pour objet un véhicule automobile équipé d'une motorisation propulsive comportant au moins un moteur thermique. Le véhicule est équipé d'une ligne d'échappement des gaz produits par le moteur thermique intégrant au moins un catalyseur. Le véhicule est équipé d'un dispositif de régulation en temps réel du fonctionnement dudit au moins un catalyseur.

Selon l'invention, le dispositif de régulation équipant le véhicule est conforme à un dispositif de régulation tel qu'il vient d'être décrit.

La motorisation propulsive du véhicule peut être exclusivement fournie par un moteur thermique ou être une motorisation propulsive hybride associant typiquement un moteur thermique et un moteur électrique.

Pour préciser aussi la notion en temps réel - notamment considérée au regard des mesures fournies par les sondes à oxygène, de l'analyse du fonctionnement du catalyseur et/ou de la régulation du fonctionnement du catalyseur - la notion en temps réel est appréciée dès lors que le moteur thermique est en fonctionnement et par suite produit des gaz d'échappement qui sont acheminés vers le catalyseur via une ligne d'échappement.

### Présentation des figures

L'invention sera mieux comprise à la lecture de la description détaillée qui suit d'un exemple de réalisation de l'invention, en relation avec les figures suivantes :

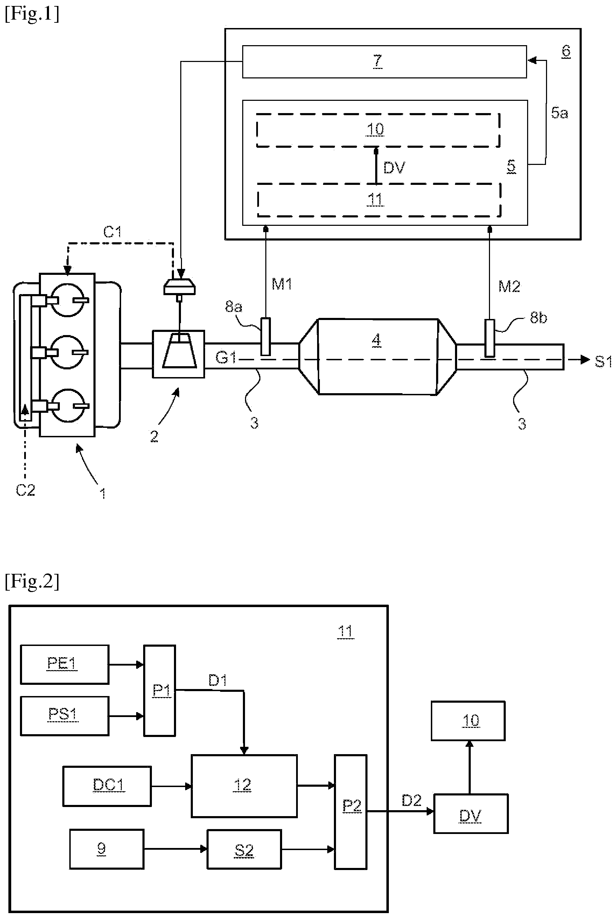

[Fig.1] La figure 1 est un schéma illustrant le contexte de l'invention, selon lequel un système de contrôle-commande relevant de l'invention procède à une régulation du fonctionnement en temps réel d'un catalyseur de traitement de gaz d'échappement qui sont produits par un moteur thermique équipant un véhicule automobile. La dite régulation est notamment effectuée sous contrôle et à l'issue d'une analyse logique en temps réel du fonctionnement du catalyseur, afin d'améliorer l'efficacité du catalyseur à traiter les gaz d'échappement.
[Fig.2] La figure 2 est un schéma illustrant un procédé relevant de l'invention, permettant d'améliorer en temps réel les performances du catalyseur via le système de contrôle-commande représenté sur la figure 1.

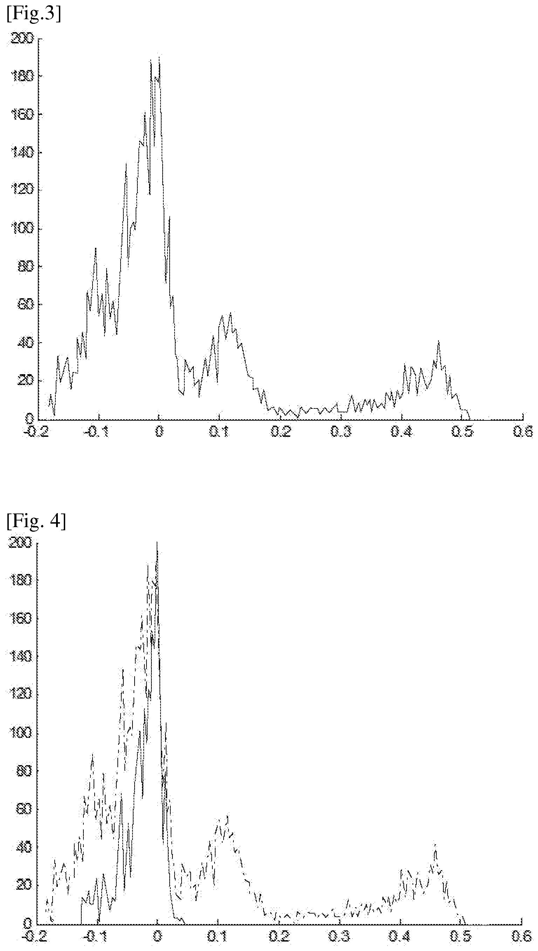

[Fig.3] La figure 3 est un premier diagramme illustrant pour exemple le risque d'un potentiel défaut d'analyse du fonctionnement en temps réel d'un catalyseur de traitement de gaz d'échappement qui sont produits par un moteur thermique équipant un véhicule automobile, que l'invention cherche à éviter.
[Fig.4] La figure 4 est un deuxième diagramme illustrant - par comparaison avec le premier diagramme représenté sur la figure 3 - le résultat obtenu par application du procédé de l'invention schématisé pour exemple sur la figure 1 et la figure 2, qui permet d'éviter que l'analyse logique obtenue du fonctionnement du catalyseur soit erronée.

### Description détaillée de l'invention

Les figures et leurs descriptions détaillées non limitatives, exposent l'invention selon des modalités particulières qui ne sont pas restrictives quant à sa portée. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur la figure 1, un véhicule dont la motorisation propulsive est au moins fournie par un moteur thermique 1 émet des gaz d'échappement G1 qu'il est nécessaire de traiter préalablement à leur rejet à l'atmosphère. Les gaz d'échappement G1 sont produits par le moteur thermique 1 qui est alimenté en comburant C1 - air notamment - et en combustible C2 - hydrocarbures notamment. Selon l'exemple illustré, la motorisation propulsive du véhicule peut être équipée d'un turbocompresseur 2 procurant en cas de besoin une suralimentation du moteur thermique 1 en comburant C1.

Les gaz d'échappement G1 sont acheminés vers l'extérieur du véhicule via une ligne d'échappement 3 intégrant un catalyseur 4. Le catalyseur 4 est un appareil de traitement des gaz d'échappement G1 par oxydo-réduction des agents chimiques toxiques qu'ils contiennent, tels que notamment du monoxyde de carbone (CO), de l'oxyde d'azote (NOx) et des imbrûlés d'hydrocarbures (HC).

Pour certifier que les gaz d'échappement G1 rejetés à l'atmosphère sont épurés conformément à la règlementation, un dispositif de contrôle-commande 6 embarqué à bord du véhicule régule le fonctionnement du catalyseur 4 en temps réel lorsque le moteur thermique 1 est en fonctionnement. Le dispositif de contrôle commande 6 comprend notamment un système d'analyse 5 et au moins un régulateur, dont un régulateur 7 du dosage en air C1 et/ou en combustible C2 admis dans le moteur thermique 1.

Le régulateur 7 est notamment configuré pour réguler la richesse en oxygène présent dans les gaz d'échappement G1 évacués hors du moteur thermique 1 à l'intérieur de la ligne d'échappement 3. La régulation en oxygène opérée par le régulateur 7 est identifiée par un ordre d'activation 5a qui est généré par le système d'analyse 5 et qui est transmis au régulateur 7 afin d'obtenir un traitement optimal des gaz d'échappement G1.

L'ordre d'activation 5a est généré par le système d'analyse 5, en cas de détection d'une erreur de richesse en oxygène dans les gaz d'échappement G1 en amont du catalyseur 4. Une telle erreur de richesse en oxygène est susceptible d'affecter la capacité du catalyseur 4 à traiter efficacement les gaz d'échappement G1 pour réduire préalablement à leur rejet à l'atmosphère la teneur des agents chimiques toxiques qu'ils contiennent.

A cet effet, le système d'analyse 5 exploite des mesures M1, M2 voltaïques qui sont fournies par des sondes 8a, 8b à oxygène placées sur la ligne d'échappement 3 de part et d'autre du catalyseur 4. Les sondes 8a, 8b à oxygène comprennent une sonde amont 8a et une sonde aval 8b, qui sont placées sur la ligne d'échappement 3 respectivement en amont et en aval du catalyseur 4 suivant le sens S1 de circulation des gaz d'échappement G1 à travers le catalyseur 4.

La sonde amont 8a fournit des mesures M1 proportionnelles et la sonde aval 8b fournit des mesures M2 binaires. Une analyse de l'état de fonctionnement du catalyseur 4 est alors opérée via le système d'analyse 5, au moins à partir d'un traitement logique des mesures M1, M2 par le système d'analyse 5. Le traitement logique des mesures M1, M2 par le système d'analyse 5 permet d'identifier une éventuelle erreur en oxygène en amont du catalyseur 4 et par suite de générer le cas échéant l'ordre d'activation 5a du régulateur 7. Le traitement logique des mesures M1, M2 réalisé par le système d'analyse 5 met en oeuvre un intégrateur 10, qui effectue une correction proportionnelle intégrale des mesures M1 fournies par la sonde aval 8b.

Cependant, il persiste un risque que l'erreur en oxygène identifiée par l'intégrateur 10 soit imprécise et/ou incorrecte, notamment selon les différentes phases de fonctionnement du moteur thermique 1 qui peuvent de surcroît varier rapidement. En effet, l'apport d'air C1 et/ou de combustible C2 dans le moteur thermique 1 est adapté selon la phase de fonctionnement du moteur thermique 1, au détriment d'une stabilité de fonctionnement du catalyseur 4.

A titre illustratif, il est représenté pour exemple sur les diagrammes de la figure 3 et de la figure 4 un repère cartésien indiquant - sur un cycle nominal d'analyse - les résultats obtenus sur la distribution d'une erreur de richesse détectée en aval du catalyseur 4 lors de l'activation de la correction proportionnelle intégrale effectuée par l'intégrateur 10. Il est repéré en abscisse les erreurs de voltage des mesures M2 fournies par la sonde aval 8b et en ordonnée la distribution des erreurs en oxygène détectées au détriment de la performance du catalyseur 4.

Il apparaît sur la figure 3 - qui relève du résultat obtenu en l'absence de l'application de la présente invention - que des erreurs en oxygène sont détectées en ordonnée alors que les erreurs de tension des mesures M2 fournies par la sonde aval 8b - indiquées en abscisse - sont éloignées d'une erreur de tension nulle (zéro) en étant détectées entre moins 0.2 V et plus 0,5 V. Or, une erreur de voltage détectée et corrigée devrait être proche de 0 (zéro) lorsque l'intégrateur 10 est activé.

L'invention propose dès lors une solution pour pallier à l'obtention d'une analyse du fonctionnement du catalyseur 4 qui serait erronée sur la base de telles erreurs de tension inexistantes illustrées sur la figure 3, car éloignées d'une erreur de tension nulle (0 : zéro) malgré leur correction par l'intégrateur 10.

Pour ce faire sur la figure 1 et la figure 2, le système d'analyse 5 relevant de l'invention intègre un module d'activation 11 de l'intégrateur 10, comme détaillé pour exemple sur la figure 2. Le module d'activation 11 de l'intégrateur 10 génère une consigne d'activation DV de l'intégrateur 10, sous condition de la validation de deux paramètres P1, P2.

Un premier paramètre P1 est relatif à une convergence d'erreur PE1 de la richesse en oxygène des gaz d'échappement G1 mesurée par la sonde amont 8a par rapport à un seuil d'erreur PS1 de référence prédéfini par calibrage. Un deuxième paramètre P2 est relatif à une détection d'un état stable de fonctionnement du catalyseur 4 sur une durée prédéfinie. Concernant le premier paramètre P1, la convergence d'erreur PE1 de la richesse en oxygène des gaz d'échappement G1 prend en compte l'évaluation d'une erreur PE1 de richesse en oxygène par rapport au dit seuil d'erreur PS1, dans une plage de valeurs d'erreur admissibles qui est préalablement définie par calibrage de l'intégrateur 10. A l'issue d'une telle évaluation, une première donnée D1 relative à l'activation de l'intégrateur 10 est émise.

Dans le cas où les erreurs PE1 de la richesse en oxygène détectées par la sonde amont 8a ne convergent pas vers le seuil d'erreur PS1, une première valeur de la première donnée D1 est relative à une interdiction d'activation de l'intégrateur 10. A contrario lorsque les erreurs PE1 de richesse en oxygène détectées par la sonde amont 8a convergent vers le seuil d'erreur PS1, une deuxième valeur de la première donnée D1 est relative à une autorisation d'activation de l'intégrateur 10.

Concernant le deuxième paramètre P2, un compteur 12 de masse gazeuse évalue une masse de gaz d'échappement G1 traversant le catalyseur 4 sur une durée prédéfinie. Une telle évaluation de masse gazeuse permet d'identifier une valeur temporelle de stabilité de l'état de fonctionnement du catalyseur 4.

La mise en oeuvre du compteur 12 de masse gazeuse est conditionnée à la génération de la deuxième valeur de la première donnée D1 autorisant une activation de l'intégrateur 10. Ceci procure une validation conjointe du premier paramètre P1 et du deuxième paramètre P2 conditionnant l'activation effective de l'intégrateur 10. Plus spécifiquement une validation de l'activation effective de l'intégrateur 10 est émise en série, premièrement par validation du premier paramètre P1 puis par validation du deuxième paramètre P2, l'activation du compteur 12 de masse gazeuse étant effective dès lors que le premier paramètre P1 est préalablement validé.

Selon l'exemple illustré, l'évaluation opérée par le compteur 12 de masse gazeuse prend en compte le débit DC1 de comburant C1 admis dans le moteur thermique 1. La masse de gaz évaluée par le compteur 12 de masse gazeuse est comparée à un seuil de masse gazeuse S2 qui est prédéfini selon la vétusté 9 du catalyseur 4, la vétusté 9 du catalyseur étant déterminante des capacités du catalyseur 4 à traiter efficacement les gaz d'échappement G1 préalablement à leur rejet à l'atmosphère.

Par suite de la comparaison entre la masse gazeuse évaluée par le compteur 12 de masse gazeuse et ledit seuil de masse gazeuse S2, une deuxième donnée D2 relative à l'activation effective ou non de l'intégrateur 10 est émise.

Il est ici rappelé que la mise en oeuvre du compteur 12 de masse gazeuse est assujettie à l'émission d'une valeur de la première donnée D1 validant l'activation de l'intégrateur 10. Ainsi, la génération d'une consigne de validation DV de l'activation de l'intégrateur 10 est générée par validation successivement en série du premier paramètre P1 et du deuxième paramètre P2.

Autrement dit dans le cas où la masse gazeuse évaluée n'atteint pas ledit seuil de masse gazeuse S2 en temps réel - de préférence en tenant compte de la vétusté 9 du catalyseur 4, une première valeur de la deuxième donnée D2 est relative à une interdiction d'activation de l'intégrateur 10. A contrario lorsque la masse gazeuse évaluée atteint ledit seuil de masse gazeuse S2, l'état de fonctionnement stable du catalyseur 4 est validé. Une deuxième valeur de la deuxième donnée D2 relative à une autorisation d'activation de l'intégrateur 10 est alors génératrice de ladite consigne de validation DV de l'activation de l'intégrateur 10. Par suite de l'analyse logique des mesures M1, M2 fournies par les sondes 8a, 8b à oxygène - au moins comprenant le traitement par l'intégrateur 10 de la mesure M1 fournie par la sonde aval 8a - l'ordre d'activation 5a du régulateur 7 est généré par le système d'analyse 5. Le régulateur 7 opère alors une correction de la richesse en oxygène des gaz d'échappement en aval du catalyseur 4, conformément à l'ordre d'activation 5a du catalyseur 4 émis par le système d'analyse 5.

Sur la figure 4 le résultat des erreurs en oxygène détectées après application d'un procédé de l'invention est représenté pour exemple en trait continu, en comparaison avec le résultat obtenu sur la figure 3 qui est reproduit sur la figure 4 en trait discontinu.

Il apparaît sur la figure 4 que les erreurs en oxygène figurant en trait continu sont détectées en ordonnée alors que les erreurs de tension des mesures M1 fournies par la sonde aval 8b - indiquées en abscisse - sont proches d'une erreur de tension nulle en étant détectées entre sensiblement moins 0,15 V et plus 0,05 V. Par application d'un procédé conforme à l'invention, il ressort une amélioration de la pertinence des erreurs en oxygène détectées par la sonde aval 8b qui conditionnent la mise en oeuvre du régulateur 7 pour accroître la performance du catalyseur 4 à traiter efficacement les gaz d'échappement G1. Selon les besoins identifiés par le système d'analyse 5 sur l'état du fonctionnement du catalyseur 4, le régulateur 7 commande - conformément à l'ordre d'activation 5a qu'il reçoit - un apport en combustible C2 et/ou en air C1 dans le moteur thermique 1. L'apport d'air C1 dans le moteur thermique 1 peut le cas échéant être effectué via le turbocompresseur 2 comme illustré sur la figure 1.

Une telle régulation permet de doser la quantité d'oxygène présent dans les gaz d'échappement G1 en sortie du moteur thermique 1, selon l'erreur en oxygène identifiée par le système d'analyse 5 qui est corrigée par l'intégrateur 10 dont la mise en oeuvre est contrôlée par le module d'activation 11. La pertinence obtenue de l'erreur en oxygène permet ainsi d'optimiser la capacité du catalyseur 4 à épurer les gaz d'échappement G1 des agents toxiques qu'ils acheminent.

## Revendications

1. Procédé de régulation en temps réel du fonctionnement d'au moins un catalyseur (4) de gaz d'échappement (G1) produits par un moteur thermique (1) équipant un véhicule automobile, le procédé mettant en oeuvre un dispositif de contrôle-commande (6) comprenant un système d'analyse (5) en temps réel du fonctionnement du catalyseur (4) et au moins un régulateur (7) d'une admission d'air dans les gaz d'échappement (G1) en amont du catalyseur (4),
la mise en oeuvre du régulateur (7) étant placée sous dépendance d'un ordre d'activation (5a) émis par le système d'analyse (5) en cas de détection d'une erreur de richesse en oxygène dans les gaz d'échappement (G1) en amont du catalyseur (4), ladite erreur en oxygène étant détectée à partir d'un traitement logique par le système d'analyse (5) de mesures (M1, M2) respectivement fournies par des sondes (8a, 8b) à oxygène voltaïques placées sur une ligne d'échappement (3) des gaz d'échappement (G1), dont une sonde amont (8a) proportionnelle et une sonde aval (8b) binaire respectivement placées en amont et en aval du catalyseur (4), **caractérisé** :
**en ce que** ladite erreur de richesse en oxygène est identifiée après une correction proportionnelle intégrale des mesures (M1) fournies par la sonde aval (8b) qui est réalisée par un intégrateur (10) que comprend le système d'analyse (5), et
**en ce que** l'activation de l'intégrateur (10) est conditionnée au moins sous dépendance de la validation :
- ) d'un premier paramètre (P1) relatif à une convergence d'erreur (PE1) de la richesse en oxygène des gaz d'échappement (G1) mesurée en amont du catalyseur (4) par la sonde amont (8a) par rapport à un seuil d'erreur (PS1) prédéfini, et
- ) d'un deuxième paramètre (P2) relatif à une détection d'un état stable de fonctionnement du catalyseur (4) sur une durée prédéfinie.

2. Procédé selon la revendication 1, **caractérisé en ce que** la validation du deuxième paramètre (P2) est opérée sous dépendance de la validation préalable du premier paramètre (P1).

3. Procédé selon l'une quelconque des revendications 1 et 2, **caractérisé en ce que** ledit seuil d'erreur (PS1) est inscrit dans une plage de valeurs d'erreur admissibles proches d'une valeur nulle, qui est préalablement définie par calibrage de l'intégrateur (10).

4. Procédé selon l'une quelconque des revendications 1 à 3, **caractérisé en ce que** la détection d'un état stable de fonctionnement du catalyseur (4) sur une durée prédéfinie est identifiée à partir d'une évaluation d'une masse de gaz d'échappement (G1) traversant le catalyseur (4) en une quantité au moins égale à un seuil de masse gazeuse (S2) prédéfini par calibrage.

5. Procédé selon revendication 4, **caractérisé en ce que** ledit seuil de masse gazeuse (S2) est prédéfini par calibrage au moins selon la vétusté (9) du catalyseur (4).

6. Procédé selon l'une quelconque des revendications 4 et 5, **caractérisé en ce que** ladite évaluation d'une masse de gaz d'échappement (G1) traversant le catalyseur (4) est fourni par un compteur (12) de masse gazeuse.

7. Procédé selon la revendication 6, **caractérisé en ce que** l'activation du compteur (12) de masse gazeuse est conditionnée à l'obtention préalable de ladite convergence d'erreur (PE1) de la richesse en oxygène des gaz d'échappement (G1) en amont du catalyseur (4) par rapport audit seuil d'erreur (PS1) de référence prédéfini.

8. Procédé selon l'une quelconque des revendications 4 à 7, **caractérisé en ce que** ladite évaluation d'une masse de gaz d'échappement (G1) traversant le catalyseur (4) prend en compte au moins un débit (DC1) d'air (C1) et/ou de combustible (C2) admis dans le moteur thermique (1).

9. Dispositif de régulation en temps réel du fonctionnement d'au moins un catalyseur (4) de gaz d'échappement (G1) produits par un moteur thermique (1) équipant un véhicule automobile, le dispositif de régulation comprenant un dispositif de contrôle-commande (6) comportant un système d'analyse (5) en temps réel du fonctionnement du catalyseur (4) à partir de mesures (M1, M2) fournies par lesdites sondes (8a, 8b) à oxygène, et comportant au moins un régulateur (7) d'une admission d'air dans les gaz d'échappement (G1) en amont du catalyseur (4) dont la mise en oeuvre est placée sous dépendance du système d'analyse (5), **caractérisé en ce que** ledit dispositif de régulation est configuré conformément à la mise en oeuvre d'un procédé selon l'une quelconque des revendications 1 à 8.

10. Véhicule automobile équipé d'une motorisation propulsive comportant au moins un moteur thermique (1) et équipé d'une ligne d'échappement (3) des gaz produits par le moteur thermique (1) intégrant au moins un catalyseur (4), le véhicule étant équipé d'un dispositif de régulation en temps réel du fonctionnement dudit au moins un catalyseur (4), **caractérisé en ce que** le dispositif de régulation équipant le véhicule est conforme à un dispositif de régulation (5) selon la revendication 9.

## Patentansprüche

1. Verfahren zur Echtzeitregelung des Betriebs von mindestens einem Katalysator (4) von Abgasen (G1), die von einem in einem Kraftfahrzeug eingebauten Wärmemotor (1) erzeugt werden, wobei das Verfahren eine Steuer-/Befehlsvorrichtung (6) implementiert, die Folgendes umfasst: Echtzeit-Analysesystem (5) des Betriebs des Katalysators (4) und mindestens einen Regler (7) einer Zufuhr von Luft in das Abgas (G1) vor dem Katalysator (4),
die Umsetzung des Reglers (7) in Abhängigkeit von einem Aktivierungsbefehl (5a) gestellt wird, der vom Analysesystem (5) im Falle der Erkennung eines Sauerstoffgehaltsfehlers im Abgas (G1) vor dem Katalysator (4) ausgegeben wird ermittelt aus einer logischen Verarbeitung durch das Analysesystem (5) von Messungen (M1, M2), die jeweils von Sonden (8a, 8b) mit voltaischem Sauerstoff bereitgestellt werden, die in einer Abgasleitung (3) der Abgase (G1) angeordnet sind, einschließlich eines Proportionalwertes stromaufwärts gelegene Sonde (8a) und eine binäre stromabwärts gelegene Sonde (8b), die jeweils stromaufwärts und stromabwärts des Katalysators (4) angeordnet sind,
**dadurch gekennzeichnet, dass** der Sauerstoffgehaltsfehler nach einer integralen proportionalen Korrektur der von der stromabwärts gelegenen Sonde bereitgestellten Messungen (M1) identifiziert wird Sonde (8b), die von einem Integrator (10) durchgeführt wird, der die Systemanalyse (5) umfasst, und
dass die Aktivierung des Integrators (10) zumindest abhängig von der Validierung:
- ) eines ersten Parameters ( P1) in Bezug auf eine Fehlerkonvergenz (PE1) des vor dem Katalysator (4) durch die vorgeschaltete Sonde (8a) gemessenen Sauerstoffgehalts der Abgase (G1) in Bezug auf eine vordefinierte Fehlerschwelle (PS1), und
- ) eines zweiten Parameters (P2), der sich auf die Erkennung eines stabilen Betriebszustands des Katalysators (4) über eine vordefinierte Zeitdauer bezieht.

2. Verfahren nach Anspruch 1, **dadurch gekennzeichnet, dass** die Validierung des zweiten Parameters (P2) in Abhängigkeit von der vorherigen Validierung des ersten Parameters (P1) erfolgt.

3. Verfahren nach einem der Ansprüche 1 und 2, **dadurch gekennzeichnet, dass** die Fehlerschwelle (PS1) in einem Bereich zulässiger Fehlerwerte nahe einem Nullwert liegt, der zuvor durch Kalibrierung des Integrators (10) definiert wird.

4. Verfahren nach einem der Ansprüche 1 bis 3, **dadurch gekennzeichnet, dass** die Erkennung eines stabilen Betriebszustands des Katalysators (4) über eine vordefinierte Zeitdauer anhand einer Auswertung einer durch den Katalysator strömenden Abgasmasse (G1) ermittelt wird (4) in einer Menge, die mindestens einem durch Kalibrierung vordefinierten Gasmassenschwellenwert (S2) entspricht.

5. Verfahren nach Anspruch 4, **dadurch gekennzeichnet, dass** der Gasmassenschwellenwert (S2) durch Kalibrierung zumindest entsprechend der Obsoleszenz (9) des Katalysators (4) vordefiniert wird.

6. Verfahren nach einem der Ansprüche 4 und 5, **dadurch gekennzeichnet, dass** die Auswertung einer durch den Katalysator (4) strömenden Abgasmasse (G1) durch einen Gasmassenzähler (12) erfolgt.

7. Verfahren nach Anspruch 6, **dadurch gekennzeichnet, dass** die Aktivierung des Gasmassenzählers (12) davon abhängt, dass zuvor die Fehlerkonvergenz (PE1) des Sauerstoffgehalts der Abgase (G1) vor dem Katalysator (4) erreicht wird. relativ zu der vordefinierten Referenzfehlerschwelle (PS1).

8. Verfahren nach einem der Ansprüche 4 bis 7, **dadurch gekennzeichnet, dass** die Bewertung einer durch den Katalysator (4) strömenden Abgasmasse (G1) mindestens einen Luftdurchsatz (DC1) (C1) und/oder oder Brennstoff (C2), der in die Wärmekraftmaschine (1) eingelassen wird.

9. Vorrichtung zur Echtzeitregelung des Betriebs von mindestens einem Katalysator (4) von Abgasen (G1), die von einem in einem Kraftfahrzeug eingebauten Wärmemotor (1) erzeugt werden, wobei die Regelungsvorrichtung eine Steuer-/Befehlsvorrichtung (6) umfasst ein Echtzeit-Analysesystem (5) des Betriebs des Katalysators (4), das auf den von den Sauerstoffsonden (8a, 8b) bereitgestellten Messungen (M1, M2) basiert und mindestens einen Regler (7) umfasst Luft in das Abgas (G1) vor dem Katalysator (4), dessen Umsetzung vom Analysesystem (5) abhängig ist, **dadurch gekennzeichnet, dass** die Regeleinrichtung entsprechend der Umsetzung eines Verfahrens nach einem der folgenden konfiguriert ist Ansprüche 1 bis 8.

10. Kraftfahrzeug, das mit einem Antriebsmotor ausgestattet ist, der mindestens einen Wärmemotor (1) umfasst, und mit einer Abgasleitung (3) für die von dem Wärmemotor (1) erzeugten Gase ausgestattet ist, in die mindestens ein Katalysator (4) integriert ist, wobei das Fahrzeug damit ausgestattet ist eine Vorrichtung zur Echtzeitregelung des Betriebs des mindestens einen Katalysators (4), **dadurch gekennzeichnet, dass** die am Fahrzeug angebrachte Regelungsvorrichtung einer Regelungsvorrichtung (5) nach Anspruch 9 entspricht.

## Claims

1. Method for real-time regulation of the operation of at least one catalyst (4) of exhaust gases (G1) produced by a heat engine (1) equipping a motor vehicle, the method implementing a control-command device (6) comprising a system (5) for analyzing in real time the operation of the catalyst (4) and at least one regulator (7) of an air intake into the exhaust gases (G1) upstream of the catalyst (4),
the implementation of the regulator (7) being placed under dependence on an activation order (5a) emitted by the analysis system (5) in the event of detection of an oxygen richness error in the exhaust gases (G1) upstream of the catalyst (4),
said oxygen error being detected from a logical processing by the analysis system (5) of measurements (M1, M2) respectively provided by voltaic oxygen probes (8a, 8b) placed on an exhaust line (3) of the exhaust gases (G1), including a proportional upstream probe (8a) and a binary downstream probe (8b) respectively placed upstream and downstream of the catalyst (4), **characterized**:
**in that** said oxygen richness error is identified after a proportional-integral correction of the measurements (M1) provided by the downstream probe (8b) which is carried out by an integrator (10) which the analysis system (5) comprises, and
**in that** the activation of the integrator (10) is conditioned at least as a dependency of the validation:
- ) of a first parameter (P1) relating to an error convergence (PE1) of the oxygen richness of the exhaust gases (G1) measured upstream of the catalyst (4) by the upstream probe (8a) with respect to a predefined error threshold (PS1), and
- ) of a second parameter (P2) relating to a detection of a stable operating state of the catalyst (4) over a predefined duration.

2. Method according to claim 1, **characterized in that** the validation of the second parameter (P2) is carried out dependent on the prior validation of the first parameter (P1).

3. Method according to any one of claims 1 and 2, **characterized in that** said error threshold (PS1) is entered in a range of admissible error values close to a zero value, which is previously defined by calibrating the integrator (10).

4. Method according to any one of claims 1 to 3, **characterized in that** the detection of a stable operating state of the catalyst (4) over a predefined duration is identified from an evaluation of a mass of exhaust gas (G1) passing through the catalyst (4) in a quantity at least equal to a gas mass threshold (S2) predefined by calibration.

5. Method according to claim 4, **characterized in that** said gas mass threshold (S2) is predefined by calibration at least according to the age (9) of the catalyst (4).

6. Method according to any one of claims 4 and 5, **characterized in that** said evaluation of a mass of exhaust gas (G1) passing through the catalyst (4) is provided by a gas mass counter (12).

7. Method according to claim 6, **characterized in that** the activation of the gas mass counter (12) is conditioned on the prior obtaining of said error convergence (PE1) of the oxygen richness of the exhaust gases (G1) upstream of the catalyst (4) relative to said predefined reference error threshold (PS1).

8. Method according to any one of claims 4 to 7, **characterized in that** said evaluation of a mass of exhaust gas (G1) passing through the catalyst (4) takes into account at least one flow rate (DC1) of air (C1) and/or fuel (C2) admitted into the heat engine (1).

9. Device for real-time regulation of the operation of at least one catalyst (4) of exhaust gases (G1) produced by a heat engine (1) equipping a motor vehicle, the regulation device comprising a control-command device (6) comprising a system (5) for real-time analysis of the operation of the catalyst (4) from measurements (M1, M2) provided by said oxygen probes (8a, 8b), and comprising at least one regulator (7) of an air intake into the exhaust gases (G1) upstream of the catalyst (4) the implementation of which is placed under dependence of the analysis system (5), **characterized in that** said regulation device is configured in accordance with the implementation of a method according to any one of claims 1 to 8.

10. Motor vehicle equipped with a propulsion engine comprising at least one heat engine (1) and equipped with an exhaust line (3) for the gases produced by the heat engine (1) incorporating at least one catalyst (4), the vehicle being equipped with a device for real-time regulation of the operation of said at least one catalyst (4), **characterized in that** the regulation device equipping the vehicle conforms to a regulation device (5) according to claim 9.
